# EUROPEAN PATENT APPLICATION

(11) **EP 2 527 618 A2**
(43) Date of publication of application: **28.11.2012**
(21) Application number: 12168062.3
(22) Date of filing: 15.05.2012
(51) Int. Cl.: F02C 6/08, F02C 9/18

(54) **A bleed flow discharge device of a gas turbine engine**

(30) Priority: 24.05.2011 GB 201108642
(71) Applicant: Rolls-Royce plc, London SW1E 6AT (GB)
(72) Inventor: Savarin, Vincent, Nottingham, Nottinghamshire NG7 4HR (GB); Britchford, Kevin, Belper, Derbyshire DE56 1DF (GB); Phillipson, Pamela, Derby, Derbyshire DE73 6XQ (GB)
(74) Representative: Gee, Philip David

(57) **Abstract**

A bleed assembly of a gas turbine engine comprises a bleed flow discharge device (136) adapted to discharge a bleed fluid flow into a main fluid flow, wherein the bleed flow discharge device comprises an outer wall (135) defining a passage (137) for the bleed fluid flow, the outer wall comprising a wave-shaped edge (139) where the bleed fluid flow meets the main fluid flow.

## Description

This invention relates to a flow discharge device, and is particularly, although not exclusively, concerned with such a device for discharging compressor bleed air into a bypass duct of a gas turbine engine.

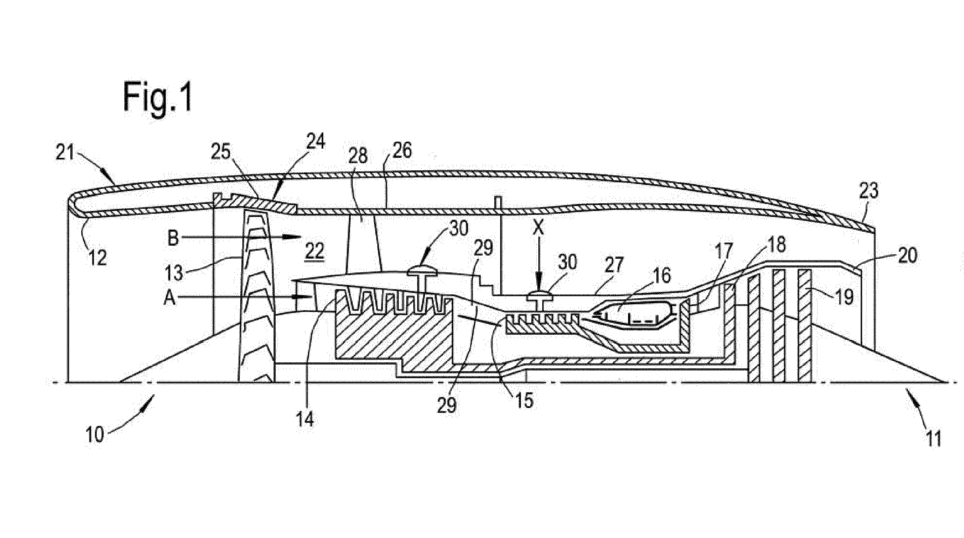

Referring to Figure 1, a ducted fan gas turbine engine (e.g. a jet engine) generally indicated at 10 has a principal and rotational axis 11. The engine 10 comprises, in axial flow series, an air intake 12, a propulsive fan 13, an intermediate pressure compressor 14, a high-pressure compressor 15, combustion equipment 16, a high-pressure turbine 17, an intermediate pressure turbine 18, a low-pressure turbine 19 and a core exhaust nozzle 20. A nacelle 21 generally surrounds the engine 10 and defines the intake 12, a bypass duct 22 and an exhaust nozzle 23.

The gas turbine engine 10 works in the conventional manner so that air entering the intake 11 is accelerated by the fan 13 to produce two air flows: a first airflow A into the intermediate pressure compressor 14 and a second airflow B which passes through the bypass duct 22 to provide propulsive thrust. The intermediate pressure compressor 14 compresses the airflow A directed into it before delivering that air to the high pressure compressor 15 where further compression takes place.

The compressed air exhausted from the high-pressure compressor 15 is directed into the combustion equipment 16 where it is mixed with fuel and the mixture combusted. The resultant hot combustion products then expand through, and thereby drive, the high, intermediate and low pressure turbines 17, 18, 19 before being exhausted through the nozzle 20 to provide additional propulsive thrust. The high, intermediate and low-pressure turbines 17, 18, 19 respectively drive the high and intermediate pressure compressors 15, 14 and the fan 13 by suitable interconnecting shafts.

During engine operation and particularly when changing rotational speed at low power it is important to ensure that the pressure ratio across each compressor 14, 15 remains below a critical working point, otherwise the engine 10 can surge and flow through the engine 10 breaks down. This can cause damage to the engine's components as well as aircraft handling problems.

To maintain a preferred pressure difference across a compressor 14, 15, or even just one stage of a compressor 14, 15, bleed assemblies 30 are provided to release pressure from an upstream part of a compressor 14,15. For example, when a gas turbine engine is operating under transient conditions, e.g. when decelerating, it may be necessary to bleed air at high pressure from the core gas flow A through the engine. Operation of a bleed assembly 30 and engine operability are described in "The Jet Engine" 6th Edition, 2005, Rolls-Royce plc, pages 79-80, and details of such operation will therefore only be briefly mentioned herein.

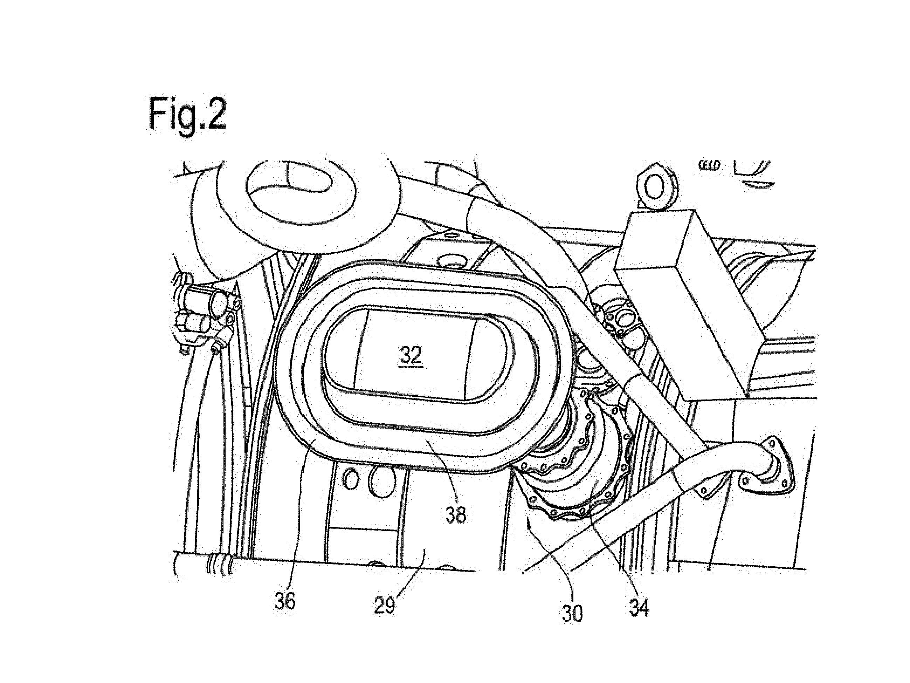

Referring to Figure 2, the bleed assemblies 30 may each bleed air through a discharge device 36 into the bypass flow B within the bypass duct 22. A typical discharge device may comprise a pepper pot 32 situated in the inner wall 27. The inner wall 27 is omitted from Figure 2, so that the compressor casing structure 29 is visible. The bleed assembly 30 comprises a bleed valve 34 which communicates at one end with the respective compressor 14, 15 and is provided at its other end with the discharge device 36 including the pepper pot 32. As shown in Figure 2, the pepper pot 32 is of "race track" form, comprising a semicircle at each end, the semicircles being interconnected by straight lines. Although not shown in Figure 2, the pepper pot 32 comprises a plurality of openings or holes through which the bleed flow may pass. The pepper pot 32 is surrounded by a gulley 38 which lies between the pepper pot 32 and the inner wall 27 of the bypass duct 22.

In operation of the engine shown in Figure 1, part of the core engine air flow A may be diverted through the bleed assembly 30 by opening the bleed valve 34 so that the bleed air flow passes from the respective compressors 14, 15 to be discharged into the bypass duct 22 through the openings (not shown in Figure 2) in the pepper pot 32. The jets of air issuing from the openings in the pepper pot form a plume initially directed outwardly, i.e. transversely of the direction of the air flow B, constituting a main flow, travelling through the bypass duct 22. In this specification, the term "transversely" is not to be understood as indicating that the plume is precisely normal to the main air flow B. Instead, the bleed air issuing from the pepper pot openings may be directed obliquely of the main air flow B. As mentioned above, this plume creates an obstruction to the main air flow B which can have an effect on the performance of the fan 13, and also contains hot gas which can come into contact with components in the bypass duct 22, principally the inner wall 27, potentially causing damage.

Pepper pots in known gas turbine engines often have a circular shape, although, as already mentioned, oblong or "race track" shapes are also known. The holes in the pepper pot may be oriented to discharge the air flowing through them in a desired direction, in order to enhance mixing of the hot bleed air with the cooler main flow through the bypass duct, generated by the fan. Such rapid mixing is desirable to avoid impingement of the hot bleed flow on the bypass duct surfaces. However, the individual flow jets from the pepper pot holes tend to coalesce into a single plume, and consequently the bleed flow does not mix well with the main flow. The plume also blocks the main flow and creates a wake behind it. The wake contains hot air and high-energy vortices that can flow into contact with the bypass duct surfaces creating "hot spots" where components can be overheated and consequently damaged. Further, the blockage created by the plume can affect the performance of the fan disposed upstream. The blockage locally increases the pressure ratio across the fan, reducing its stall margin. Thus, the plume creates an increased likelihood that the fan will stall, a condition in which the flow across the fan breaks down and all thrust from the engine is lost. Furthermore, pepper pot outlets are typically relatively large and heavy components, and their use can thus be expensive.

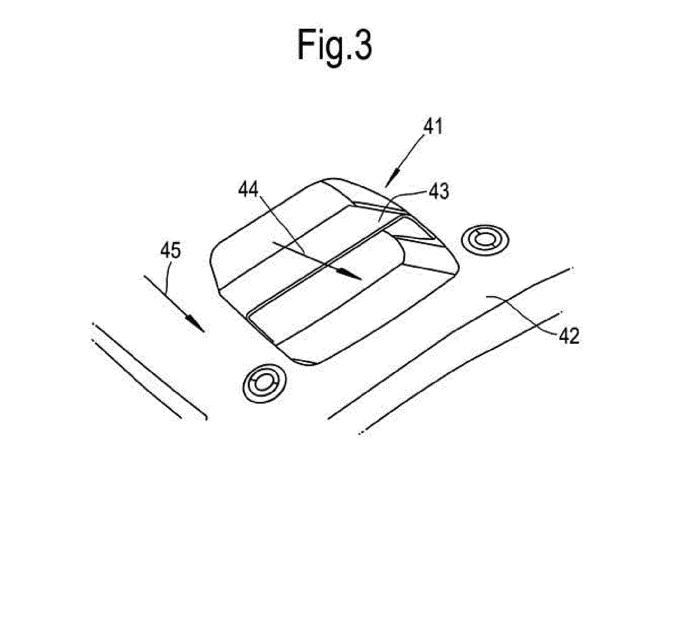

To address this and other issues, recent bleed systems have been designed with an open exit that forms a jet flow that penetrates into the bypass flow. In this respect, Figure 3 illustrates a simple vent outlet of a type previously proposed. As can be seen, the vent outlet 41, which is provided at the end of a ventilation duct, is formed flush with the surface of an engine casing 42, and may comprise one or more louvers 43 extending across the outlet. The hot stream of vent gases is indicated by arrow 44, and this is directed through the vent outlet and into a relatively cool bypass flow indicated by arrow 45, and is thus ejected from the ventilation duct into the bypass flow 45. However, a problem with this arrangement is that it is not particularly effective at mixing the hot flow of vent gas with the cool bypass flow, with the result that the hot gas impinges on the downstream surface of the engine casing, which may be made from a carbon composite unable to withstand such temperatures. This leads to a "hot streak" on the engine casing and can cause significant thermal damage to the structure unless it is properly protected from the heat, which can increase the weight of the engine as well as the overall cost.

A further problem with such open vent outlets is excessive noise, which is the subject of increasing regulation for aircraft. For example, pressurized hot air from the bleed system may be released into the bypass duct generating bleed flow jet mixing noise and, when the outlet pressure ratio is high enough, shock noise. Furthermore, since the internal noise of the bleed system may be minimized by virtue of a low pressure drop arising from a multi-stage design, the external plume noise may be significant.

The present disclosure therefore seeks to address these issues.

According to a first aspect of the present disclosure there is provided a flow discharge device adapted to discharge a secondary, e.g. bleed, fluid flow into a main fluid flow, wherein the flow discharge device comprises a wall, e.g. outer wall, defining a passage for the secondary fluid flow, the wall comprising a wave-shaped edge where the secondary fluid flow meets the main fluid flow.

Undulations forming the wave-shaped edge may be provided in a radial plane. The wall may be pleated. Ends of the pleats may form the wave-shaped edge of the wall.

Undulations forming the wave-shaped edge may be provided in a substantially circumferential plane following the wall.

Undulations forming the wave-shaped edge may be provided in a plane angled with respect to the circumferential and radial planes.

The wave-shaped edge may comprise a plurality of chevrons distributed about the circumference of the wall. Each chevron may comprise a first portion and a second portion. The first and second portions may be angled to converge towards or away from one another. The wave-shaped edge may further comprise a plurality of first curvilinear transverse portions provided between the first and second portions of each chevron. The wave-shaped edge may further comprise a plurality of second curvilinear transverse portions provided between the first portion of a chevron and the second portion of an adjacent chevron.

The wave-shaped edge may define any shape comprising peaks and troughs. The wave-shaped edge may be one or more of scalloped, serrated, crenulated and undulating.

The main fluid flow may flow within a duct. The flow discharge device may be adapted to discharge the bleed flow into the duct. The duct may be a bypass duct of a gas turbine engine. The flow discharge device may comprise a compressor bleed valve outlet.

A gas turbine bleed assembly may comprise the aforementioned flow discharge device.
gas turbine engine may comprise the aforementioned flow discharge device.

For a better understanding of the present disclosure, and to show more clearly how it may be carried into effect, reference will now be made, by way of example, to the accompanying drawings, in which:-
Figure 1 is a schematic sectional view of a gas turbine engine;
Figure 2 is a view of a prior art bleed outlet of the engine of Figure 1;
Figure 3 is a view of a further prior art bleed outlet;
Figure 4 is a perspective view of a bleed flow discharge device according to a first example of the present disclosure; and
Figure 5 is a perspective view of a bleed flow discharge device according to a second example of the present disclosure.

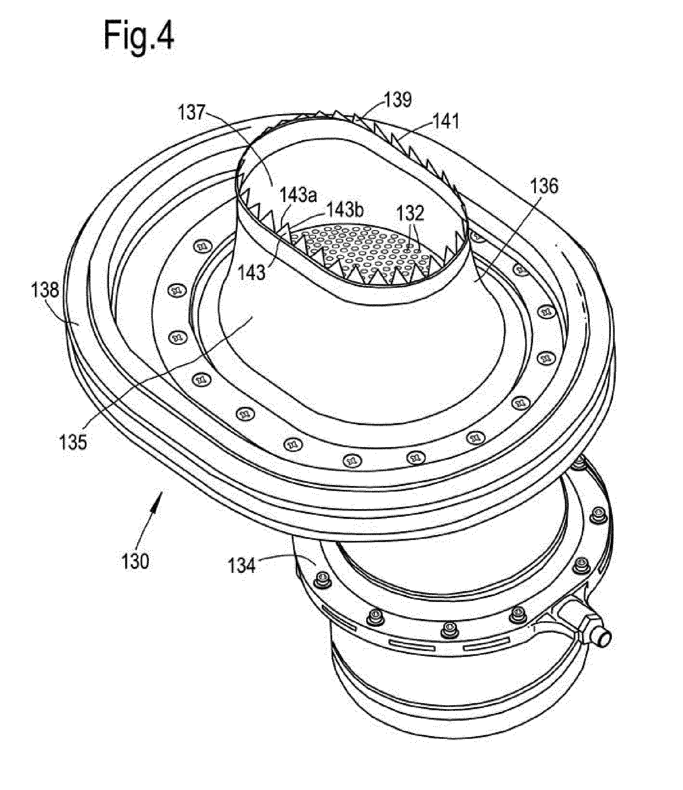

With reference to Figure 4, a bleed assembly 130 according to a first example of the present disclosure may discharge a secondary fluid, e.g. air, through a discharge device 136 into a main fluid, e.g. into the bypass flow B within the bypass duct 22 (as shown in Figure 1). The bleed assembly 130 may comprise a bleed valve 134 which may communicate at one end with the respective compressor 14, 15 (as shown in Figure 1) and at its other end with the discharge device 136. Accordingly, the bleed valve 134 may selectively permit a bleed flow from the compressors 14, 15 to the bypass duct 22.

The discharge device may comprise an outer wall 135 which may define a passage 137 for the secondary flow, e.g. bleed flow. A perimeter of the outer wall 135 of the discharge device 136 may be of "race track" form, for example comprising a semicircle at each end, the semicircles being interconnected by straight lines. As such the perimeter of the outer wall 135 may define an obround. The discharge device 136 may be surrounded by a gulley 138 which may lie between the outer wall 135 of the discharge device 136 and the inner wall 27 of the bypass duct 22 (as shown in Figure 1).

The outer wall 135 may comprise a wave-shaped edge 139 about its perimeter where the secondary fluid flow meets the main fluid flow. The wave-shaped edge profile may be formed by a plurality of projections 141, e.g. serrations, projecting from the outer wall 135. In the particular example shown in Figure 4, the wave-shaped edge profile 139 may comprise a plurality of chevrons 143 distributed about the circumference of the outer wall 135. The edge of each chevron may comprise a first portion 143a and a second portion 143b. The first and second portions 143a, 143b may be angled to converge towards one another. The first and second portions 143a, 143b may meet at a point to define a peak in the wave-shaped profile. Furthermore, the adjacent first and second portions 143a, 143b of neighbouring chevrons 143 may touch, e.g. to define a trough in the wave-shaped profile 139. Accordingly, as shown, the projections 141 forming the wave-shaped profile 139 may be triangular, e.g. saw-tooth, in shape. However, in alternate examples, the projections 141 may be trapezoidal, rectangular, square, semicircular, sinusoidal or any other shape. Furthermore, the projections 141 may be spaced apart such that a gap is formed between neighbouring projections.

The projections 141 may be angled with respect to the outer wall 135. For example, undulations forming the wave-shaped edge 139 may be provided in a plane angled with respect to both a circumferential plane defined by the outer wall 135 and a radial plane intersecting the circumference of the outer wall. The projections may be angled inwards, e.g. towards the passage 137. However, in an alternative example (not shown), the undulations forming the wave-shaped edge 139 may be provided in a substantially circumferential plane following the outer wall 135.

The discharge device 136 may optionally comprise an internal pepper pot 132 situated within the passage 137 defined by the outer wall 135. The pepper pot may comprise a plurality of openings through which the secondary flow may pass. The pepper pot 132 may be omitted in an alternative example (not shown).

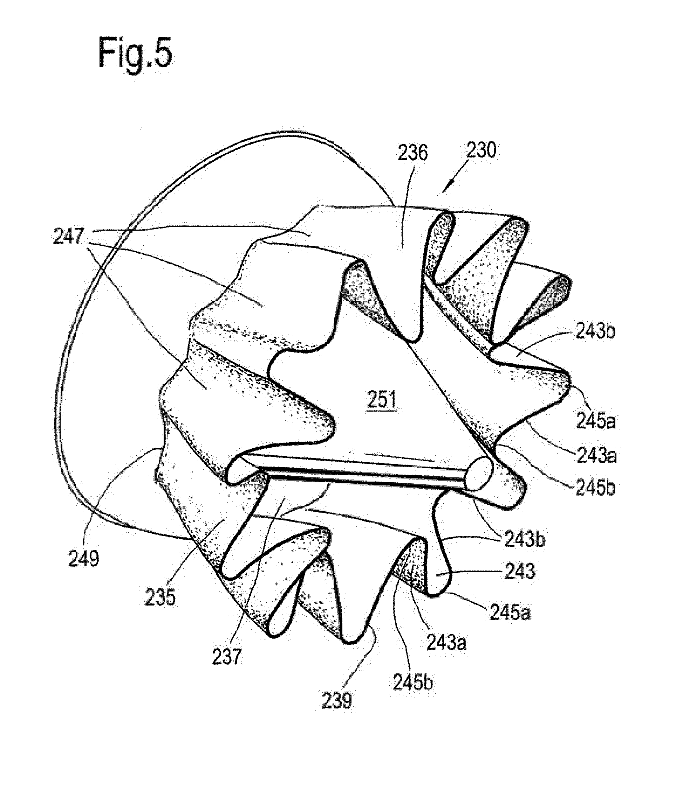

With reference to Figure 5, a bleed assembly 230 according to a second example of the present disclosure may be substantially similar to the first example of the present disclosure. For example, the bleed assembly 230 of the second example may comprise a discharge device 236 comprising an outer wall 235 which may define a passage 237 for a secondary flow, e.g. bleed flow, into a main fluid, e.g. into the bypass flow B within the bypass duct 22. Furthermore, the outer wall 235 may comprise a wave-shaped edge 239 about its perimeter where the secondary fluid flow meets the main fluid flow.

However, in contrast with the first example, the outer wall 235 of the second example may be pleated and as such may comprise one or more folds or pleats 247. Accordingly, the perimeter of the edge of the outer wall 235 may comprise undulations and ends of the pleats 247 may form the wave-shaped edge 239 of the outer wall 235.

The wave-shaped edge 239 may comprise a plurality of lobes or chevrons 243 distributed about the circumference of the outer wall 235. The edge of each chevron 243 may comprise a first portion 243a and a second portion 243b. The first and second portions 243a, 243b may be angled to converge towards one another. The wave-shaped edge 239 may further comprise a plurality of first curvilinear transverse portions 245a provided between the first and second portions 243a, 243b of each chevron 243. In addition, the wave-shaped edge 239 may further comprise a plurality of second curvilinear transverse portions 245b provided between the first portion 243a of a chevron and the second portion 243b of an adjacent chevron.

The undulations forming the wave-shaped edge 239 may substantially be provided in a radial plane intersecting the circumference of the outer wall 235. However, the wave-shaped edge profile 239 of the second example may not reside entirely in the radial plane. For example, the first and second portions 243a, 2443b of the chevrons 243 may be angled with respect to the radial plane and as a result the first and second curvilinear transverse portions 245a, 245b may be axially spaced apart such that they do not reside in the same radial plane.

The outer wall 235 may comprise a throat 249, e.g. a narrowing in the cross-sectional area of the passage 237 defined by the outer wall. The discharge device 236 may also comprise a central member 251, e.g. a cone, disposed within the passage 237 and about which the secondary fluid may flow. The throat 249 and/or central member 251 may be omitted.

In either the first or the second example of the present disclosure, the discharge device 136, 236 may be angled with respect to the flow B in the bypass duct 22. For example, the discharge device may be angled such that the bleed flow leaving the discharge device is parallel to the bypass flow B. Alternatively, the discharge device may be angled such that the bleed flow leaving the discharge device is, at least initially, perpendicular to the bypass flow B. Further still, the discharge device may be angled such that the bleed flow leaving the discharge device is at an angle between the aforementioned parallel and perpendicular extremes.

In a further example of the present disclosure (not shown), the discharge device may comprise both examples of the wave-shaped edge. For example, the lobes of the second example may additionally be provided with the projections of the first example.

Advantageously, both examples of the present disclosure may attenuate bleed system noise. For example, by increasing the mixing between the bleed flow (e.g. hot air plume) and the bypass duct air, the jet noise sources will be reduced. This is achieved thanks to the wave-shaped edge profile which promotes mixing between the bleed flow and the external, e.g. bypass, flow. In either case, the wave-shaped profile increases the area between the flows over which momentum and heat may be exchanged between the bleed flow and the mainstream flow. The first example achieves this by having a wave-shaped edge profile with a component in the circumferential plane. The second example achieves this by having a wave-shaped edge profile with a component in the radial plane. The wave-shaped edge of either example may promote vortices and hence mixing between the bleed flow and mainstream flow.

The present disclosure may also apply to a situation where a bleed flow exhausts overboard from an engine into an external flow, e.g. in the case of a turboprop engine a bleed flow may exhaust to atmospheric conditions external to the engine with the discharge device disclosed herein. Similarly, the present disclosure may be applied to a land based gas turbine, e.g. an aero-derivative or other gas turbine, for which a bypass duct may not be present and the bleed flow may be exhausted to atmospheric conditions. In other words, the discharge device of the present disclosure may not discharge into a bypass duct and may discharge into any external flow field. The present disclosure may also be applied in any situation where a quiet pressure reduction is required for a secondary flow flowing into a primary flow.

## Claims

1. A bleed flow discharge device (136) adapted to discharge a bleed fluid flow into a main fluid flow (B), wherein the bleed flow discharge device comprises a wall (135) defining a passage (137) for the bleed fluid flow, the wall comprising a wave-shaped edge (139) where the bleed fluid flow meets the main fluid flow.

2. The bleed flow discharge device of claim 1, wherein undulations (141) forming the wave-shaped edge are provided in a radial plane.

3. The bleed flow discharge device of claim 2, wherein the wall is pleated and ends of the pleats (247) form the wave-shaped edge of the wall.

4. The bleed flow discharge device of claim 1, wherein undulations (243) forming the wave-shaped edge are provided in a substantially circumferential plane following the wall.

5. The bleed flow discharge device of claim 1, wherein undulations forming the wave-shaped edge are provided in a plane angled with respect to the circumferential and radial planes.

6. The bleed flow discharge device of any preceding claim, wherein the wave-shaped edge comprises a plurality of chevrons (143, 243) distributed about the circumference of the wall, each chevron comprising a first portion (143a, 243a) and a second portion (143b, 243b), the first and second portions being angled to converge towards one another.

7. The bleed flow discharge device of claim 6, wherein the wave-shaped edge further comprises a plurality of first curvilinear transverse portions (245a) provided between the first and second portions of each chevron.

8. The bleed flow discharge device of claim 6 or 7, wherein the wave-shaped edge further comprises a plurality of second curvilinear transverse portions (245b) provided between the first portion of a chevron and the second portion of an adjacent chevron.

9. The bleed flow discharge device of any preceding claim, wherein the wave-shaped edge defines a shape comprising peaks and troughs.

10. The bleed flow discharge device of any preceding claim, wherein the main fluid flow flows within a duct (22) and the bleed flow discharge device is adapted to discharge the bleed flow into the duct.

11. The bleed flow discharge device of claim 10, wherein the duct is a bypass duct of a gas turbine engine.

12. The bleed flow discharge device of any preceding claim, wherein the bleed flow discharge device comprises a compressor bleed valve (134) outlet.

13. A gas turbine bleed assembly comprising the bleed flow discharge device of any preceding claim.

14. A gas turbine engine comprising the bleed flow discharge device of any of claims 1 to 12.
